# FASCICULE DE BREVET EUROPEEN

(11) **EP 2 766 703 B1**
(45) Date de publication et mention de la délivrance du brevet: **09.01.2019**
(21) Numéro de dépôt: 12780251.0
(22) Date de dépôt: 12.10.2012
(51) Int. Cl.: G01L 1/02, G01L 5/00, G01M 7/08, G09B 23/30

(54) **CAPTEUR DE PRESSION POUR MANNEQUINS ANTHROPOMORPHES**
DRUCKSENSOR FÜR ANTROPOMORPHE TESTPUPPEN
PRESSURE SENSOR FOR ANTHROPOMORPHIC DUMMIES

(30) Priorité: 14.10.2011 FR 1159291
(43) Date de publication de la demande: 20.08.2014
(73) Titulaire: Institut Français des Sciences et Technologies des Transports, de l'Amenagement et des Reseaux, 77420 Champs sur Marne (FR)
(72) Inventeur: BEILLAS, Philippe, F-69007 Lyon (FR); ALONZO, François, F-69680 Chassieu (FR)
(74) Mandataire: Thibault, Jean-Marc
(86) Numéro de dépôt international: PCT/FR2012/052332
(87) Numéro de publication internationale: WO 2013/054061

(56) Documents cités:
- EP-A2- 0 230 315
- FR-A- 1 426 249
- FR-A- 1 438 366
- FR-A1- 2 683 320
- US-A- 4 409 835
- US-A1- 2007 279 643
- US-A1- 2011 239 731

## Description

La présente invention concerne les capteurs de pression intra-abdominale ou intra-thoracique pour mannequin anthropomorphe et, plus généralement tout modèle biomécanique utilisé pour étudier les différents effets produits par des chocs sur un corps humain, notamment lors d'accidents de transport tels qu'en circulation routière, ferroviaire ou en transport aérien.

L'invention vise tout particulièrement, mais non exclusivement, le domaine de l'étude des phénomènes physiques et traumatismes corporels corollaires intervenant dans des accidents de circulation routière, notamment dans les automobiles. Un domaine privilégié d'application de l'invention concerne l'étude des blessures abdominales lors d'accidents de la circulation routière.

Pour réaliser de telles études, on met en oeuvre depuis longtemps maintenant des mannequins de test, dit anthropomorphes, dont les propriétés physiques de tailles, de masse et de densité corporelles sont les plus proches possibles de celles d'humains réels afin que leur comportement dynamique lors de chocs et accidents provoqués volontairement lors de « crash-tests » de véhicules soit le plus proche possible de celui des êtres humains. Ces mannequins possèdent ainsi tous les éléments constitutifs essentiels d'un être humain, la tête, le thorax, l'abdomen, les membres, etc., et sont placés dans des véhicules, à la place du conducteur et des passagers. On provoque ensuite, avec ces véhicules, différents types d'essais et on étudie le comportement des mannequins et les effets, sur eux, des chocs qu'ils ont subis au cours de l'accident, notamment en réaction aux différents systèmes de sécurité tels que ceintures de sécurité et airbags, qui peuvent provoquer différents traumatismes corporels malgré leur fonction première de sécurisation des occupants d'un véhicule.

Une des études menées concerne les traumatismes organiques liés aux pressions importantes des ceintures de sécurité sur l'abdomen et le thorax des passagers de véhicules automobiles lors d'accidents, notamment les efforts appliqués sur l'abdomen par la partie pelvienne de la ceinture passant sur le bassin. Des lésions de l'abdomen peuvent aussi être créées par des chargements sur d'autres surfaces de contact telles que la porte lors d'un choc latéral, ou une tablette dans un environnement ferroviaire.

Les intensités de tels chargements sont actuellement évaluées en simulation et tests réels au moyen de capteurs de pression logés dans la partie abdominale de mannequins anthropomorphes. Ces capteurs sont constitués essentiellement d'une chambre de volume déterminé remplie d'un fluide et comportant un capteur de pression pour mesurer l'intensité de chargement, dans le corps du mannequin, de la partie sous-abdominale de la ceinture lors d'un choc de véhicule frontal ou latéral. Un exemple d'un tel capteur de pression est notamment décrit dans le brevet FR 2 683 320 de la demanderesse.

Dans le même sens, le brevet US 4409835 décrit un système de mesure de la pression subie par un mannequin anthropomorphe dans sa section thoracique. Ce système de mesure comporte une pluralité de traverses s'étendant les unes au-dessus des autres pour simuler la section thoracique. Chaque traverse est équipée de deux capteurs de pression à trois axes, disposés de part et d'autre du plan sagittal médian et réalisés chacun par un boitier rigide fixé sur la traverse.

Les capteurs connus à ce jour ne donnent pas entière satisfaction. En particulier, un premier problème de ces capteurs concerne l'impossibilité d'une discrimination optimale des efforts de pression subis par les différents organes de l'abdomen et selon l'orientation des chocs subis par un véhicule lors d'un accident. Or, une telle discrimination des efforts en fonction de la nature des chocs subis est importante dans la mesure où la tolérance des organes de l'abdomen à la pression est différente selon qu'ils se situent en partie basse, en partie haute et/ou latéralement dans l'abdomen.

Un autre problème des capteurs de pression intra-abdominale connus concerne leurs stabilité et résistance dans les mannequins anthropomorphes. En effet, soit ils sont fixés rigidement dans la partie abdominale des mannequins et dans ce cas ne réagissent pas fidèlement lors de chocs au voisinage de leur point d'attache, soit ils sont librement disposés sans fixation dans des canaux prévus à cet effet auquel cas ils sont alors plus mobiles que les organes réels et peuvent même dans certains cas être expulsés lors des chocs. Dans certains cas, ces problèmes de stabilité des capteurs impactent négativement la fidélité et la sensibilité de réponses des capteurs lors des tests, ainsi que la compréhension des phénomènes biomécaniques intervenant lors des accidents.

Dans l'état de la technique, il est également connu par le document US 2011/0239731, un système de mesure des forces subies par un mannequin anthropomorphe. Ce système de mesure comporte une couche de matériau sensible à la pression disposée entre des feuilles interne et externe de support. Un tel système de mesure n'est pas adapté pour discriminer et déterminer les efforts de pression subis par les différents organes du corps humain lors d'un choc. En effet, ce système mesure des efforts de surface qui sont sans rapport direct avec les structures anatomiques internes du corps humain et le chemin de transmission des efforts.

US 2007/0279 décrit un capteur lumineux pour mesurer des déplacements dans un système contenant un fluide.

La présente invention a ainsi pour but de remédier aux inconvénients des solutions antérieures connues en proposant un capteur de pression intra-abdominale pour mannequin anthropomorphe, qui soit parfaitement adapté à ce type de mannequin lorsqu'il est destiné à être embarqué dans un véhicule de transport pour subir un accident provoqué expérimentalement et qui permette d'obtenir des évaluations fiables des efforts s'appliquant sur l'abdomen des mannequins lors d'un tel accident sans présenter les inconvénients des capteurs connus tels qu'énoncés précédemment.

Le but de l'invention est en particulier de procurer un capteur de pression qui soit stable dans un mannequin anthropomorphe et procure une mesure de pression fiable et fidèle quelle que soit l'orientation du choc subi et l'intensité de celui-ci afin d'estimer le plus précisément possible les risques de lésions des organes de l'abdomen de passagers de véhicules automobiles lors d'accidents de la circulation.

Dans cet objectif, la présente invention propose un capteur de pression pour mesurer des pressions subies par un mannequin anthropomorphe dans une section abdominale ou thoracique du tronc dudit mannequin. Selon l'invention, ce capteur de pression est tel que défini par la revendication 1.

Le capteur de pression de l'invention permet de détecter un chargement mécanique d'une zone corporelle telle que l'abdomen et de quantifier son intensité, afin que celle-ci puisse servir à estimer en laboratoire un risque de lésion organique. La sollicitation mécanique peut être appliquée par une ceinture de sécurité d'un véhicule dans lequel le mannequin anthropomorphe est placé lors d'un test et peut survenir par exemple lors d'un événement transitoire incluant les accidents, incidents, chutes, déclenchements de dispositifs actifs tels qu'airbags ou autres dispositifs de sécurité actifs. La sollicitation mécanique peut également résulter des impacts du mannequin contre les différentes parties internes du véhicule lors de chocs.

Le capteur de pression de l'invention permet d'obtenir une estimation de l'intensité d'une sollicitation mécanique appliquée à la région abdominale grâce à au moins deux chambres de mesure de pression placée dans le corps du mannequin de part et d'autre du plan sagittal de la section abdominale ou thoracique du mannequin. Ainsi, le capteur de pression de l'invention est sensible à des chargements suivant plusieurs directions, notamment frontale, latérale ou oblique par rapport au mannequin.

Selon une forme avantageuse de réalisation, le capteur de pression peut également comporter plus de deux chambres de mesure de pression pour permettre une meilleure localisation du chargement et des lésions potentielles associées. Par exemple, l'utilisation de chambres de mesure de pression séparées pour la droite et la gauche de l'abdomen permet de dissocier les chargements appliqués respectivement aux régions du foie et de la rate. De même, l'utilisation de chambres de mesure de pression distinctes en partie supérieure et/ou inférieure de l'abdomen du mannequin, permet de dissocier les chargements appliqués aux organes pleins tels que le foie et la rate (qui sont situés dans la partie supérieure de l'abdomen) des chargements appliqués aux organes creux tels que l'intestin grêle et la chambre de mesure de pression urinaire (situés en partie inférieure).

Les différentes chambres de mesure de pression sont chacune remplies - au moins partiellement - d'un fluide incompressible afin d'assurer une propagation de la pression exercée à l'intérieur des chambres vers les cellules de mesure de pression.

Selon diverses caractéristiques préférées du capteur de pression de l'invention :
- Les chambres de mesure de pression comportent plusieurs compartiments internes séparés par des cloisons et remplis chacun d'un fluide incompressible, les chambres comportant chacune au moins une cellule de mesure de pression ;
- Les chambres de mesure de pression comportent plusieurs compartiments internes communiquant entre eux de sorte que le fluide incompressible est apte à circuler entre lesdits compartiments, lesdites chambres comportant chacune au moins une cellule de mesure de pression ;
- le fluide incompressible de remplissage des chambres est constitué au choix : d'un liquide, d'un gel, d'une émulsion ;
- les chambres sont constituées d'une enveloppe de matière souple, notamment de polyuréthane ;
- les chambres sont logées dans des réservations prévues à cet effet dans la section abdominale ou thoracique du mannequin et amovible de ces réservations ;
- l'enveloppe des chambres présente localement des variations d'épaisseur ;
- l'enveloppe des chambres présente localement des variations de raideur ;
- l'enveloppe des chambres comporte localement des renforts superficiels externes constitués d'une couche de matière additionnelle collée sur une surface externe des chambres ;
- l'enveloppe des chambres est constituée de plusieurs matières présentant des propriétés mécaniques différentes ou de plusieurs éléments d'une même matière mais de propriétés mécaniques différentes liés de façon étanche par soudage ou collage;
- les chambres sont bloquées en translation verticale et/ou horizontale dans leur réservation par un lien mutuel;
- les chambres comportent chacune au moins deux cellules de mesure de pression en deux positions opposées de la chambre;
- les chambres présentent une forme de révolution.

D'autres caractéristiques et avantages de la présente invention apparaîtront au cours de la description suivante donnée en regard des dessins annexés à titre illustratif, mais nullement limitatif, dans lesquels :
La **figure 1** représente une vue en perspective d'un mannequin anthropomorphe dans lequel est installé un capteur de pression selon l'invention,
La **figure 2** représente, respectivement dans une vue de face et dans une vue de coté, en coupe, un mode de réalisation d'un capteur de pression selon l'invention en association avec un mannequin anthropomorphe,
La figure 3 représente une variante de réalisation d'un capteur de pression selon l'invention avec deux chambres de mesure de pression individuelles reliées solidement entre elles.
La figure 4 montre un exemple de réalisation d'un capteur avec les deux chambres de pression reliées solidement au bloc support du capteur et ne faisant pas parti de l'invention.
Les **figures 5** à **14** représentent différentes configurations de chambre individuelle de mesure de pression pour le capteur de pression de l'invention.

Les figures annexées à la présente description représentent différents modes de réalisation d'un capteur de pression **1** selon l'invention. Dans la description qui suit de ces modes de réalisation, on considérera la mise en oeuvre du capteur de pression **1** de l'invention dans un mannequin anthropomorphe **2** utilisé aux fins de tests de sécurité de véhicules automobiles, généralement appelés « crash-tests », en remplacement de passagers humains pour étudier les différents effets produits sur le corps humain lors d'accidents de la circulation .

Le mannequin anthropomorphe **2** comporte de façon classique une structure analogue à celle d'un humain. Il comporte donc une tête **21,** un tronc **22,** un bassin **23** articulés les uns par rapport aux autres par un rachis artificiel (non représenté) ainsi que deux bras **24** articulés sur le tronc **22** et deux jambes **25** articulées sur le bassin **23.** Ces différentes parties constitutives du mannequin **2** présentent des caractéristiques de densité et des propriétés mécaniques analogues, sinon identiques, à celle du corps humain. La structure de ce mannequin, bien connue des hommes de l'art dans le domaine des études biomécaniques et d'accidentologie ne sera pas discutée plus en détail ici.

Selon l'invention, le capteur de pression **1** comporte essentiellement au moins deux chambres souples **4** étanches de mesure de pression disposées dans la section abdominale du tronc **22** du mannequin de part et d'autre d'un plan sagittal médian **P.** Les chambres **4** de mesure de pression sont remplies d'un fluide incompressible **6** et comportent chacune au moins une cellule **5** de mesure de pression apte à délivrer à sa sortie un signal électrique représentatif de la pression dudit fluide **6** dans lesdites chambres de mesure de pression. En d'autres termes, les variations des forces exercées sur les chambres de mesure **4,** qui présentent un caractère souple ou déformable, conduisent à des variations de la pression du fluide incompressible **6,** détectées par les cellules de mesure de pression **5.**

Dans l'exemple de réalisation représenté sur les figures, le capteur de pression **1,** et plus particulièrement les chambres **4** de mesure de pression sont disposées dans un bloc support **3** maintenu dans le tronc **22** du mannequin **2,** dans la partie basse de ce tronc **22** représentant la zone abdominale du mannequin **2.**

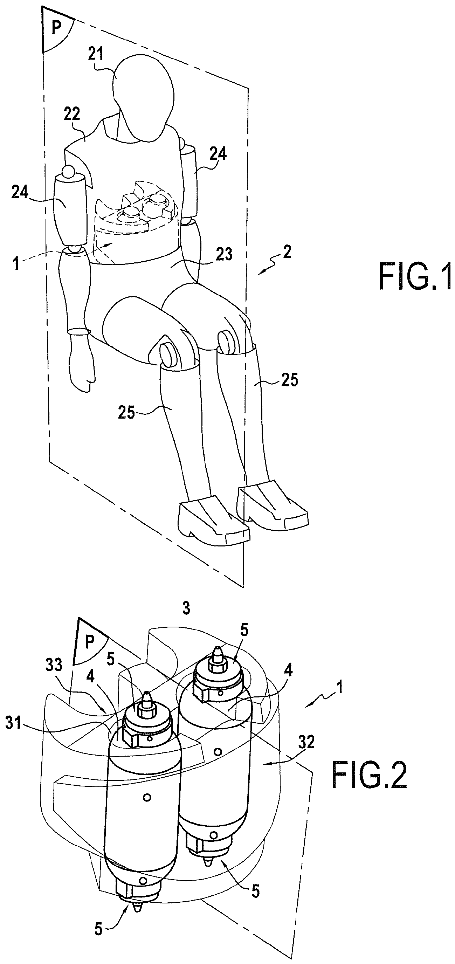

Comme représenté sur la figure **2****,** le bloc support **3** du capteur de pression **1** peut être constitué par un bloc de mousse de polyuréthane rotomoulé présentant une face antérieure **32** convexe et une face postérieure **33** sensiblement concave conférant ainsi au bloc de support **3** une forme globale en C. De tels blocs supports sont par exemple produits et commercialisés par la société Humanetics Innovative Solutions.

Les deux chambres de mesure de pression **4** du capteur **1** sont logées chacune dans une réservation ménagée dans le bloc support **3.** Sur les figures **2** à **4****,** les chambres **4** sont logées chacune dans une réservation cylindrique **31,** de préférence débouchante de part en part sur toute la hauteur du bloc de support **3.**

Les deux chambres de mesure de pression **4** sont disposées symétriquement de part et d'autre d'un plan sagittal médian **P** du bloc de support **3,** correspondant sensiblement au plan sagittal du tronc **22** du mannequin **2** sur la figure **1****.** Cette disposition particulière des deux chambres de pression **4** est particulièrement importante. En effet, elle permet ainsi de procurer au capteur de pression **1** de l'invention une sensibilité à tout type et toute direction de choc lors d'un test d'accident, notamment un choc frontal, un choc latéral ou un choc à composantes multiples frontales et latérales, pouvant entraîner des efforts de compression de l'abdomen du tronc **22** du mannequin **2,** aussi bien dans des plans horizontaux que verticaux.

Dans l'exemple de réalisation représenté sur la figure **2****,** les deux chambres de mesure de pression **4** sont constituées chacune d'un réservoir cylindrique formé par une enveloppe **41** de matière synthétique, de type polyuréthane ou silicone, close à ses deux extrémités longitudinale par une cellule de mesure de pression **5** de type capteur de pression industriel miniature à membrane, apte à transmettre un signal électrique image de la pression mesurée dans la chambre de mesure de pression **4,** le cas échéant connecté à des moyens d'enregistrement. Les deux chambres de mesure de pression **4** présentent de préférence toutes deux un volume interne identique. Elles sont remplies de façon préférée d'un fluide incompressible **6.** Ce fluide incompressible **6** peut être un liquide, un gel ou encore une émulsion par exemple de l'huile de paraffine ou de silicone, de la vaseline ou du gel échographique, ou un mélange de ces composants. De préférence toutefois selon l'invention, le fluide incompressible **6** est constitué d'un gel tel qu'un mélange de vaseline et de paraffine permettant d'adapter sa viscosité.

D'une manière générale, les chambres de mesure de pression **4** sont très souples puisqu'elles peuvent s'écraser presque complètement. De telles chambres de mesure de pression **4** se distinguent par rapport à des capteurs hydrauliques qui imposent l'utilisation de pièces rigides et incluent des capots rigides afin de transmettre l'effort.

Dans un mode de réalisation avantageux, le fluide incompressible **6** présente un certain degré de viscosité afin de pouvoir ajuster la réponse mécanique du capteur de pression **1** et de gérer le décalage temporel d'arrivée de l'onde de pression lorsque plusieurs cellules de mesure **5** sont dans une même chambre **4** lors d'essais de chargement du mannequin **2.** L'ajustement de la réponse mécanique et de la propagation de la pression peut aussi être réalisé en insérant lors de la fabrication un insert composé de matériau alvéolaire (mousse) à l'intérieur de la chambre, le volume occupé pouvant être partiel ou total, et les alvéoles ouvertes ou fermées.

Lorsque les chambres de mesure de pression **4** sont intégrées dans un bloc support **3** composé de mousse comme dans l'exemple de réalisation décrit sur les figures **1** à **4****,** le lien entre les chambres de mesure de pression **4** et la mousse du bloc support **3** au niveau des parois des réservations **31** est laissé glissant, comme sur la figure 2.

En particulier, lors de mouvements de flexion lombaire, le bas du thorax osseux et le diaphragme peuvent appliquer une compression verticale à la zone de l'abdomen du tronc d'un individu. En l'état actuel des connaissances biomécaniques, il n'est pas clair si cette compression verticale accroît le risque lésionnel pour le contenu de l'abdomen. Si le risque est accru, un couplage entre la flexion, la compression verticale et la mesure de pression serait désirable.

Dans le cas d'une absence d'accroissement du risque lésionnel, il serait souhaitable que les mesures de pression ne soient pas affectées par la compression verticale. Ceci peut être obtenu en utilisant, comme représenté sur la figure **2****,** des chambres de mesure de pression **4** de forme cylindrique parallèle à l'axe principal de compression et en laissant ces chambres de mesure de pression **4** glissantes dans les réservations **31** par rapport à la mousse environnante du bloc support **3.**

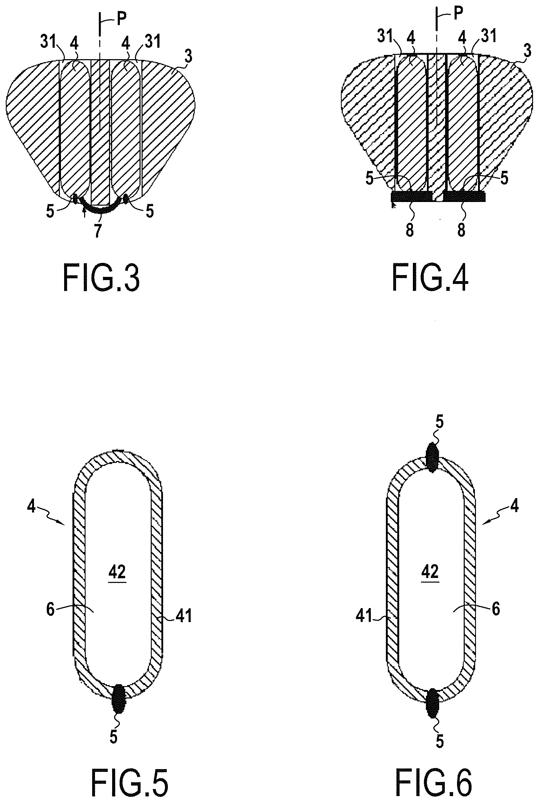

Dans ce cas, pour une bonne maîtrise de la mesure de pression effectuée lors d'un chargement complexe, il convient d'empêcher les chambres de mesure de pression **4** de migrer vers le thorax sous l'effet de la compression et de la décélération, tout en évitant de les contraindre de manière excessive en les accrochant au bassin **23.** Pour assurer cette fonction, comme représenté sur les figures **3** et **4****,** les chambres de mesure de pression **4** peuvent être liées entre elles au niveau d'au moins deux de leurs extrémités longitudinales inférieures par un lien souple **7** ou encore deux socles **8** plus larges que les réservations **31** du bloc support **3.** Cette liaison peut également être réalisée à l'aide d'un collage, d'un élargissement de la partie inférieure des enveloppes **41** des chambres de mesure de pression **4,** ou de tout autre moyen mécanique. Selon la présente invention, la liaison des chambres de mesures de pression **4** entre elles ou au bloc support **3** est particulièrement importante pour pallier les effets d'éjections des chambres de mesure de pression parfois rencontrés avec les capteurs de pression connus.

Il est préféré, selon l'invention, que les chambres de mesure de pression **4** du capteur de pression **1** soient indépendantes et amovibles du bloc support **3,** et ainsi remplaçables et adaptables à façon en fonction des besoins des essais de chargement que l'on souhaite réaliser.

La présente invention améliore également l'adaptabilité des paramètres physiques des chambres de mesure de pression **4** pour rendre compte au mieux dans le mannequin anthropomorphe **2** lors d'essais de la réalité anatomique du corps humain en fonction des efforts transmis en cas de chocs.

Aussi selon l'invention, les chambres de mesure de pression peuvent adopter différentes configurations et/ou structures propres, décrites ci-après et représentées schématiquement aux figures **5** à **14****.** Sur ces figures, les chambres de mesure de pression **4** sont représentées dans une forme axisymétrique de section transversale cylindrique et de section longitudinale ovale mais toute autre forme, de préférence régulière, peut être envisagée.

Dans une forme de réalisation la plus simple, les chambres de mesure de pression **4** du capteur de pression **1** de l'invention peuvent être formées d'une simple enveloppe **41** sensiblement cylindrique formant un compartiment interne unique **42** rempli de fluide incompressible **6** et dotée, à une extrémité, par exemple inférieure, d'une cellule de mesure de pression industrielle **5.**

Comme représenté à la figure **6****,** les chambres de mesure de pression **4** peuvent comporter au moins deux cellules de mesure de pression industrielle **5** aux extrémités supérieure et inférieure de l'enveloppe **41** formant la chambre de mesure de pression **4.** Ainsi, l'implantation de plusieurs cellules de mesure de pression **5** par chambre de mesure de pression **4** permet de mieux localiser la zone d'application des efforts de pression externes en analysant les décalages temporels entre signaux de pression issus de chaque cellule de mesure de pression **5.** Ce décalage est la conséquence de la vitesse de propagation de l'onde de pression et de la distance entre la source de l'onde et les cellules **5.**

Selon l'invention, la multiplicité des chambres de mesure de pression **4** et des cellules de mesure de pression **5** permet une meilleure localisation du chargement appliqué à la zone de l'abdomen du mannequin **2** et donc des lésions potentielles associées sur un humain en cas d'accident de la route. Par exemple, l'utilisation de chambres de mesure de pression **4** séparées pour la droite et la gauche de l'abdomen de part et d'autre du plan sagittal **P** du tronc **22** mannequin **2** dans le capteur de pression **1** de l'invention permet de dissocier les chargements appliqués respectivement aux régions du foie et de la rate.

De même, bien que cela ne soit pas représenté sur les figures annexées, on peut également envisager l'utilisation de chambres de mesure de pressions **4** en partie supérieure ou inférieure du tronc **22** qui permet de dissocier les chargements appliqués aux organes pleins tels que le foie et la rate (qui sont situés dans la partie supérieure de l'abdomen) des chargements appliqués aux organes creux tels que l'intestin grêle et la chambre de mesure de pression urinaire (situés en partie inférieure de l'abdomen).

Ainsi, de façon générale selon l'invention, le nombre et la localisation des chambres de mesure de pressions **4** et des cellules de mesure de pression **5** du capteur de pression **1** peut être adapté en fonction du type d'application et des besoins de localisation du chargement lors de tests avec le mannequin **2.**

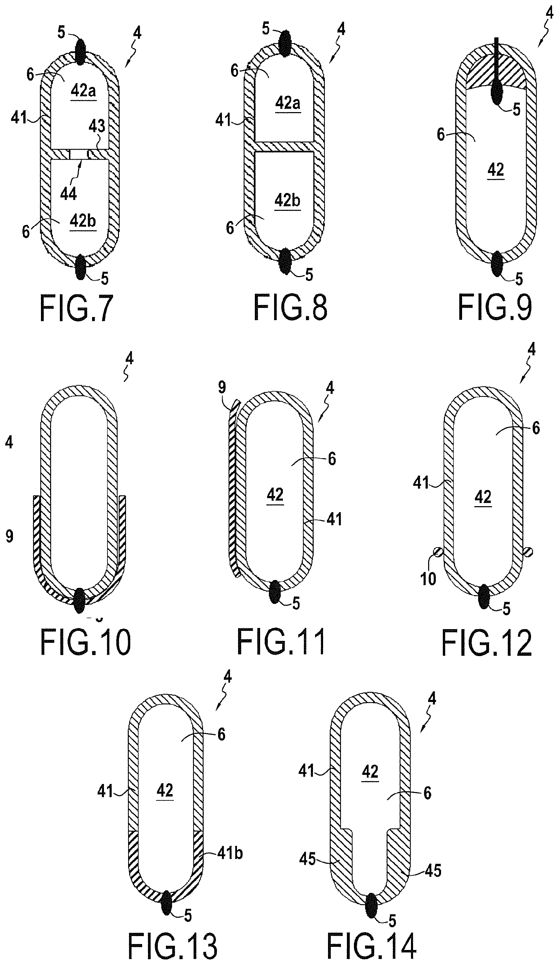

On peut également envisager d'affiner encore la compréhension des mécanismes de chargement de l'abdomen en cas de chocs en opérant soit une liaison fluidique de communication entre les chambres de mesure de pression **4** ou, de façon plus simple, en compartimentant lesdites chambres de mesure de pression **4** comme représenté aux figures **7 et 8****.**

Ainsi sur la figure **7****,** une chambre de mesure de pression **4** formée d'une enveloppe **41** comportant deux compartiments internes **42a, 42b** de même volume séparés par une cloison **43** comportant un orifice **44** de communication entre les deux compartiments **42a, 42b,** chaque compartiment **42a, 42b** comportant une cellule de mesure de pression **5.**

La figure **8** quant à elle représente une variante de réalisation de la figure **7****,** dans laquelle les deux compartiments **42a, 42b** sont totalement indépendants les uns des autres et ne communiquent pas entre eux, la cloison **43** étant close et étanche entre les deux dits compartiments **42a, 42b.**

Une chambre de mesure de pression **4** telle que représentée aux figures **7** et **8** présente l'avantage d'augmenter la différence de pression mesurée en partie supérieure et inférieure selon la localisation du chargement, tout en conservant une transmission de pression entre les deux chambres (ce qui est un avantage par rapport à l'utilisation de chambres complètement séparées en haut et en bas) et en n'utilisant qu'un seul capteur de pression (ce qui fournit un avantage économique).

La figure **9** quant à elle représente une chambre de mesure de pression **4** incorporant à l'intérieur de l'enveloppe **41,** dans le compartiment **42** de remplissage du fluide incompressible **6** un insert de mousse **11** collé à l'enveloppe **41** à une extrémité du compartiment **42.** Dans cette réalisation, l'insert de mousse **11** permet une adaptation de la compressibilité de la chambre mesure de pression **4** et surtout du fluide incompressible **6** en fonction de la nature du chargement que l'on souhaite tester à l'aide d'un capteur de pression **1** tel que fourni par l'invention. En particulier, une telle configuration pourrait permettre de prendre en compte la compressibilité des organes creux humains due à la présence de gaz et d'adapter la raideur de la chambre en fonction de la compression.

La résistance à la compression des chambres de mesure de pression **4** ainsi que leur sensibilité à la pression extérieure selon différentes directions de sollicitation en chargement peuvent également être ajustées par des variations locales de raideur de l'enveloppe **41** des chambres de mesure de pression **4** par renforcement local de l'enveloppe **41** des chambres de mesure de pression **4** de façon à réduire dans les zones renforcées la proportion de la pression externe transmise à la chambre de mesure de pression **4.** Ainsi, il est possible de prendre en compte des différences locales de tolérance au chargement sans augmenter le nombre de chambres de mesures de pression **4** dans le capteur de pression **1** ou le nombre de cellules de pression, ou d'ajuster la sensibilité de la réponse suivant la direction de chargement.

La raideur des chambres de mesure est ainsi ajustée afin de correspondre à la partie du corps qu'elles remplacent, telle que l'abdomen. Ainsi, les chambres de mesure participe à la réponse de cette partie du corps.

Les figures **10** à **14** représentent ainsi différents modes de réalisation d'une chambre de mesure de pression **4** structurée pour obtenir des raideurs locales distinctes de l'enveloppe **41.** Dans ces modes de réalisation, la chambre de mesure de pression **4** comporte une seule cellule de mesure de pression **5;** elle pourrait toutefois de façon analogue en comporter plusieurs.

Une première réalisation consiste, comme représenté sur les figures **10** et **11****,** à coller ou souder une pièce de renfort **9,** de matière(s) et/ou de propriétés mécaniques différentes, le cas échéant semi-rigide, sur une portion de paroi externe de l'enveloppe **41** de la chambre de pression **4** afin de modifier sur la surface correspondant à cette portion la raideur de l'enveloppe **41** et la rendre ainsi plus résistante aux contraintes mécaniques de compression que le reste de l'enveloppe **41,** dépourvu de tel renfort **9.** Ceci peut permettre de réduire la pression mesurée dans une région renforcée résistant mieux aux chocs. Par exemple, si la partie inférieure de l'abdomen a une meilleure tolérance aux chocs, il est possible de renforcer la partie inférieure de la chambre comme représenté sur la figure **11** de manière à pouvoir utiliser un niveau de pression unique pour prédire les lésions dans la partie inférieure et supérieure de l'abdomen et de ne pas avoir besoin de localiser le chargement. De même, si la tolérance de l'abdomen au choc était plus importante dans un chargement latéral, un renfort latéral comme représenté sur la figure **11** permettrait d'utiliser la même valeur limite de pression pour des chargements frontaux ou latéraux.

Une seconde réalisation, analogue, et représentée à la figure **12****,** peut consister à procurer un renfort annulaire **10** de matière(s) et/ou de propriétés mécaniques différentes de l'enveloppe **41,** pour renforcer uniquement une section horizontale de l'enveloppe **41.** Un tel renfort annulaire **10** permet par exemple de réduire la contribution globale de la zone renforcée de l'enveloppe **41** à une mesure globale de pression, si cette zone de la chambre de mesure de pression **4** correspond à une région anatomique peu vulnérable au chargement mécanique.

Une troisième variante de réalisation d'une chambre de mesure de pression à enveloppe de raideur variable consiste, comme représenté à la figure **13****,** à réaliser une enveloppe **41** composite de plusieurs matières ou éléments **41a, 41b** présentant des propriétés mécaniques différentes ou encore de plusieurs éléments **41a, 41b** d'une même matière présentant des propriétés mécaniques différentes et liés entre eux de de façon étanche par soudage ou collage.

Enfin, une dernière réalisation possible d'une chambre de mesure de pression **4** à enveloppe **41** de raideur variable consiste à procurer une enveloppe **41** présentant localement des variations d'épaisseur **45** pour procurer au niveau de ces variations d'épaisseurs **45** une raideur de l'enveloppe **41** accrue.

Selon ces différentes réalisations, il est possible de façon simple de réaliser une enveloppe **41** de chambre de mesure de pression **4** pour le capteur de pression **1** dont les propriétés géométriques et mécaniques peuvent être modulées en fonction de la raideur globale et de la sensibilité désirées.

Ainsi, comme précédemment décrit, la raideur globale en compression de la chambre de mesure de pression **4** peut être ajustée en faisant varier l'épaisseur et les propriétés du matériau constituant l'enveloppe **41,** en introduisant des matériaux plus ou moins compressibles à l'intérieur de la chambre de mesure de pression ou en faisant encore varier l'épaisseur locale de l'enveloppe **41.**

De façon complémentaire, on peut également considérer de modifier la forme globale de l'enveloppe **41** de la chambre de mesure de pression **4.** Ainsi, une enveloppe **41** en forme de sphère est plus rigide qu'une enveloppe **41** de forme lenticulaire.

Il doit être considéré que les chambres de mesure de pression **4** présentent une forme permettant une mesure omnidirectionnelle, non limitée par des pièces rigides directionnelles.

On peut également encore faire varier les conditions de remplissage de l'enveloppe **41** par le fluide incompressible **6.**

Le capteur de pression **1** décrit ci-dessus s'utilise et fonctionne de la façon suivante :
Un mannequin **2** comme illustré sur la figure **1** et comportant un capteur de pression **1** dans le tronc **22,** au niveau de l'abdomen, est placé dans un véhicule, à l'une des places habituellement occupée par un être humain, en étant retenu à cette place par un harnais de sécurité, tel qu'une ceinture de sécurité dont la partie pelvienne passe sur le bassin **23.** Le capteur de pression **1,** et plus particulièrement les cellules de mesure de pression **5** de celui-ci sont par exemple, reliées électroniquement par des câbles ou bus électriques à une unité d'acquisition et de traitement de signaux. Cette unité d'acquisition peut notamment comporter des convertisseurs analogiques/numériques de signaux électriques pour faciliter l'analyse de données acquises.

Le véhicule est alors accéléré normalement sur une certaine distance, puis soumis à un choc pour simuler un accident susceptible de se produire dans la réalité, la technique connue consistant à projeter le véhicule contre un obstacle et/ou réciproquement ou à faire se rencontrer plusieurs véhicules entre eux par exemple.

Pendant la première phase, quand le véhicule est arrêté, le capteur de pression **1** est à l'état de repos et le signal délivré par les cellules de mesure de pression **5** des chambres de mesure de pression **4** est nul ou considéré comme tel. Une éventuelle remise à zéro peut être obtenue en établissant l'équilibre du pont de mesure dans lequel sont insérées les jauges de contrainte.

En revanche, en phase d'accélération, et surtout en phase de choc, les forces de retenue transitant par les sangles du harnais de sécurité provoquent des pressions s'exerçant sur le bassin **23** et le tronc **22** du mannequin **2,** qui sont transmises au capteur de pression **1** localisé dans la zone de l'abdomen du tronc **22.**

Si la sangle pelvienne de la ceinture de sécurité reste localisée sur le bassin, alors les efforts de la ceinture sont transmis en très grande partie au bassin osseux, préservant largement l'abdomen et son capteur du chargement. Il est à noter que ceci est le fonctionnement recherché dans l'utilisation de la ceinture de sécurité et que ce type de fonctionnement n'est pas générateur de lésion abdominale. Par contre, si la ceinture est positionnée trop haut ou glisse du bassin vers le haut lors de la décélération (phénomène de sous-marinage), alors la ceinture pelvienne charge directement l'abdomen du mannequin **2** et comprime les chambres de mesure de pression **4,** qui remplacent et jouent le rôle des organes (foie, viscères, rate, estomac) de l'abdomen du mannequin **2.** A l'intérieur des chambres de mesure de pression **4,** la pression du fluide incompressible **6** varie en fonction de l'intensité des forces qui s'exercent sur elles. Les cellules de mesure de pression **5** de chaque chambre de mesure de pression **4** délivrent alors un signal qui varie en fonction des variations de la pression du fluide incompressible **6.** Réciproquement, l'étude des variations du signal délivré par les cellules de mesure de pression **5** permettent d'analyser les effets produits par les sangles de retenue lors du choc subi par le véhicule, sur l'abdomen et sur la masse intra-abdominale, selon la forme des sangles, leur position d'accrochage, la matière les constituant, etc.

Les chambres de pression **4** peuvent aussi être sensibles au chargement direct de la ceinture diagonale si elle est mal positionnée, par exemple sous le bras. De même, si la ceinture diagonale ou une intrusion par exemple de la porte en choc latéral déforme de manière importante le bas du thorax, le chargement peut alors être transmis à la partie supérieure des chambres de pression **4.**

## Revendications

1. Capteur de pression **(1)** pour mesurer des pressions subies par un mannequin anthropomorphe **(2)** dans une section abdominale ou thoracique du tronc dudit mannequin, du type comportant une chambre étanche souple de mesure de pression disposée dans le tronc dudit mannequin, ladite chambre **(4)** de mesure de pression étant remplie d'un fluide incompressible **(6)** dont la pression varie en fonction de l'intensité des forces exercées sur ladite chambre qui comporte une cellule de mesure de pression apte à délivrer à sa sortie un signal électrique représentatif de la pression dudit fluide **(6)** dans ladite chambre de mesure de pression, **caractérisé en ce qu'**il comporte au moins deux chambres **(4)** étanches souples de mesure de pression disposées dans la section abdominale ou thoracique du tronc dudit mannequin de part et d'autre d'un plan sagittal médian **(P)** de ladite section abdominale ou thoracique, lesdites chambres **(4)** de mesure de pression étant remplies d'un fluide incompressible **(6)** dont la pression varie en fonction de l'intensité des forces exercées sur lesdites chambres qui comportent chacune au moins une cellule **(5)** de mesure de pression apte à délivrer à sa sortie un signal électrique représentatif de la pression dudit fluide **(6)** dans lesdites chambres de mesure de pression, et **en ce que** les chambres de mesure de pression **(4)** sont intégrées dans un bloc support **(3)** composé de mousse, en étant logées chacune dans une réservation ménagée dans le bloc support **(3),** le lien entre les chambres de mesure de pression **(4)** et la mousse du bloc support **(3)** au niveau des parois des réservations **(31)** étant laissé glissant.

2. Capteur de pression selon la revendication 1, **caractérisé en ce que** les chambres **(4)** de mesure de pression comportent plusieurs compartiments internes **(42a, 42b)** séparés par une cloison **(43)** et remplis chacun de fluide incompressible **(6),** les chambres comportant chacune au moins une cellule de mesure de pression **(5).**

3. Capteur de pression selon l'une des revendications 1 ou 2, **caractérisé en ce que** les chambres de mesure de pression **(4)** comportent plusieurs compartiments internes **(42a, 42b)** communiquant entre eux de sorte que le fluide incompressible **(6)** est apte à circuler entre lesdits compartiments, lesdites chambres comportant au moins une cellule de mesure de pression **(5).**

4. Capteur de pression selon l'une des revendications 1 à 3, **caractérisé en ce que** le fluide incompressible **(6)** de remplissage des chambres de mesure de pression **(4)** est constitué au choix d'un liquide, d'un gel ou d'une émulsion.

5. Capteur de pression selon l'une des revendications 1 à 4, **caractérisé en ce que** les chambres de mesure de pression **(4)** sont constituées d'une enveloppe **(41)** de matière souple.

6. Capteur de pression selon la revendication 5, **caractérisé en ce que** les chambres de mesure de pression **(4)** sont constituées d'une enveloppe **(41)** de polyuréthane.

7. Capteur de pression selon l'une des revendications 5 ou 6, **caractérisé en ce que** les chambres de mesure de pression **(4)** sont logées dans des réservations **(31)** prévues à cet effet dans la section abdominale ou thoracique du mannequin et amovibles de ces réservations **(31).**

8. Capteur de pression selon l'une des revendications 5 à 7, **caractérisé en ce que** l'enveloppe **(41)** des chambres de mesure de pression **(4)** présente localement des variations de raideur.

9. Capteur de pression selon l'une des revendications 5 à 7, **caractérisé en ce que** l'enveloppe **(41)** des chambres de mesure de pression **(4)** présente localement des variations d'épaisseur pour procurer une variation locale de la raideur de l'enveloppe **(41).**

10. Capteur de pression selon l'une des revendications 5 à 7, **caractérisé en ce que** l'enveloppe **(41)** des chambres de mesure de pression **(4)** comporte localement des renforts superficiels **(9)** externes constitués d'une couche de matière additionnelle collée sur une surface externe de l'enveloppe **(41)** pour procurer une variation locale de raideur de l'enveloppe.

11. Capteur de pression selon l'une des revendications 5 à 10, **caractérisé en ce que** l'enveloppe **(41)** des chambres de mesure de pression **(4)** est constituée de plusieurs matières présentant des propriétés mécaniques différentes ou de plusieurs éléments d'une même matière présentant des propriétés mécaniques différentes et liés de façon étanche par soudage ou collage.

12. Capteur de pression selon l'une des revendications 7 à 11, **caractérisé en ce que** les chambres de mesure de pression **(4)** sont bloquées en translation verticale et/ou horizontale dans leur réservation par un lien mutuel **(7, 8),** à l'aide d'un collage, d'un élargissement de la partie inférieure de enveloppes des chambres de mesure de pression ou tout autre moyen mécanique.

13. Capteur de pression selon l'une des revendications 1 à 12, **caractérisé en ce que** chaque chambre de mesure de pression **(4)** comporte au moins deux cellules **(5)** de mesure de pression en deux positions opposées de la chambre de mesure de pression.

14. Capteur de pression selon l'une des revendications 1 à 13, **caractérisé en ce que** les chambres de mesure de pression **(4)** présentent une forme de révolution.

15. Capteur de pression selon l'une des revendications 1 à 14, **caractérisé en ce que** les chambres de mesure de pression **(4)** sont de forme cylindrique parallèle à un axe principal de compression, et sont laissées glissantes dans les réservations **(31)** par rapport à la mousse environnante du bloc support **3.**

## Patentansprüche

1. Drucksensor (1) zur Messung von Druck, dem eine anthropomorphe Testpuppe (2) in einer Bauch- oder Brustregion des Rumpfs der Testpuppe ausgesetzt ist, des Typs umfassend eine nachgiebige dichte Kammer zur Messung des Drucks, der im Rumpf der Testpuppe vorherrscht, wobei die Kammer (4) zur Messung des Drucks mit einem inkompressiblen Fluid (6) gefüllt ist, dessen Druck als Funktion der Intensität von Kräften variiert, welche auf die Kammer ausgeübt werden, die eine Zelle zur Messung des Drucks umfasst, welche geeignet ist, an ihrem Ausgang ein elektrisches Signal zu liefern, das für den Druck des Fluids (6) in der Kammer zur Messung des Drucks repräsentativ ist, **dadurch gekennzeichnet, dass** dieser mindestens zwei nachgiebige dichte Kammern (4) zur Messung des Drucks umfasst, die in der Bauch- oder Brustregion des Rumpfs der Testpuppe auf beiden Seiten einer sagittalen Mittelebene (P) der Bauch- oder Brustregion angeordnet sind, wobei die Kammern (4) zur Messung des Drucks mit einem inkompressiblen Fluid (6) gefüllt sind, dessen Druck als Funktion der Intensität von Kräften variiert, welche auf die Kammern ausgeübt werden, die jeweils mindestens eine Zelle (5) zur Messung des Drucks umfassen, die geeignet ist, an ihrem Ausgang ein elektrisches Signal zu liefern, das für den Druck des Fluids (6) in der Kammer zur Messung des Drucks repräsentativ ist, und dadurch, dass die Kammern (4) zur Messung des Drucks in einem Trägerblock (3) integriert sind, der aus Schaum besteht, indem sie jeweils in einer Aussparung aufgenommen sind, die in dem Trägerblock (3) angeordnet ist, wobei die Verbindung zwischen den Kammern (4) zur Messung des Drucks und dem Schaum des Stützblocks (3) auf der Höhe von Trennwänden der Aussparungen (31) gleiten gelassen wird.

2. Drucksensor nach Anspruch 1, **dadurch gekennzeichnet, dass** die Kammern (4) zur Messung des Drucks mehrere innere Abteile (42a, 42b) umfassen, die durch eine Zwischenwand (43) getrennt sind und jeweils mit dem inkompressiblen Fluid (6) gefüllt sind, wobei die Kammern jeweils mindestens eine Zelle (5) zur Messung des Drucks umfassen.

3. Drucksensor nach einem der Ansprüche 1 oder 2, **dadurch gekennzeichnet, dass** die Kammern (4) zur Messung des Drucks mehrere innere Abteile (42a, 42b) umfassen, die miteinander derart kommunizieren, dass das inkompressible Fluid (6) geeignet ist, zwischen den Abteilen zu zirkulieren, wobei die Kammern mindestens eine Zelle (5) zur Messung des Drucks umfassen.

4. Drucksensor nach einem der Ansprüche 1 bis 3, **dadurch gekennzeichnet, dass** das inkompressible Fluid (6) zum Füllen der Kammern (4) zur Messung des Drucks wahlweise aus einer Flüssigkeit, aus einem Gel oder aus einer Emulsion besteht.

5. Drucksensor nach einem der Ansprüche 1 bis 4, **dadurch gekennzeichnet, dass** die Kammern (4) zur Messung des Drucks aus einer Hülle (41) aus einem nachgiebigen Material bestehen.

6. Drucksensor nach Anspruch 5, **dadurch gekennzeichnet, dass** die Kammern (4) zur Messung des Drucks aus einer Hülle (41) aus Polyurethan bestehen.

7. Drucksensor nach einem der Ansprüche 5 oder 6, **dadurch gekennzeichnet, dass** die Kammern (4) zur Messung des Drucks in den Aussparungen (31) aufgenommen sind, die zu diesem Zweck in der Bauch- oder Brustregion der Testpuppe bereitgestellt sind, und aus diesen Aussparungen (31) entnommen werden können.

8. Drucksensor nach einem der Ansprüche 5 bis 7, **dadurch gekennzeichnet, dass** die Hülle (41) der Kammern (4) zur Messung des Drucks lokal Variationen der Steifigkeit aufweist.

9. Drucksensor nach einem der Ansprüche 5 bis 7, **dadurch gekennzeichnet, dass** die Hülle (41) der Kammern (4) zur Messung des Drucks lokal Variationen der Dicke aufweist, um eine lokale Variation der Steifigkeit der Hülle (41) zu ergeben.

10. Drucksensor nach einem der Ansprüche 5 bis 7, **dadurch gekennzeichnet, dass** die Hülle (41) der Kammern (4) zur Messung des Drucks lokal externe Oberflächenverstärkungen (9) aufweist, die aus einer Schicht aus einem zusätzlichen Material bestehen, das auf eine äußere Oberfläche der Hülle (41) geklebt ist, um eine lokale Variation der Steifigkeit der Hülle zu ergeben.

11. Drucksensor nach einem der Ansprüche 5 bis 10, **dadurch gekennzeichnet, dass** die Hülle (41) der Kammern (4) zur Messung des Drucks aus mehreren Materialien, die unterschiedliche mechanische Eigenschaften aufweisen, oder ausmehreren Elementen desselben Materials, die unterschiedliche mechanische Eigenschaften aufweisen und auf dichte Weise durch Schweißen oder Kleben verbunden sind, besteht.

12. Drucksensor nach einem der Ansprüche 7 bis 11, **dadurch gekennzeichnet, dass** die Kammern (4) zur Messung des Drucks vertikal und/oder horizontal translatorisch in ihrer Aussparung durch eine gegenseitige Verbindung (7, 8) mit Hilfe einer Klebung, einer Verbreiterung des unteren Teils der Hülle der Kammern zur Messung des Drucks oder irgendein anderes mechanisches Mittel blockiert sind.

13. Drucksensor nach einem der Ansprüche 1 bis 12, **dadurch gekennzeichnet, dass** jede Kammer (4) zur Messung des Drucks mindestens zwei Zellen (5) zur Messung des Drucks an zwei gegenüberliegenden Positionen der Kammer zur Messung des Drucks umfasst.

14. Drucksensor nach einem der Ansprüche 1 bis 13, **dadurch gekennzeichnet, dass** die Kammern (4) zur Messung des Drucks eine Rotationsform aufweisen.

15. Drucksensor nach einem der Ansprüche 1 bis 14, **dadurch gekennzeichnet, dass** die Kammern (4) zur Messung des Drucks eine zylindrische Form parallel zu einer Hauptkompressionsachse aufweisen, und in den Aussparungen (31) in Bezug auf den umgebenden Schaum des Trägerblocks (3) gleiten gelassen werden.

## Claims

1. A pressure sensor (1) for measuring the pressures to which an anthropomorphic dummy (2) is subjected in an abdominal or thoracic section of the trunk of said dummy, of the type including a sealed flexible pressure-measuring chamber disposed in the trunk of said dummy, said pressure-measuring chamber (4) being filled with an incompressible fluid (6) the pressure of which varies depending on the intensity of the forces exerted on said chamber which includes a pressure-measuring cell capable of delivering at its output an electrical signal representing the pressure of said fluid (6) in said pressure-measuring chamber, **characterized in that** it includes at least two sealed flexible pressure-measuring chambers (4) disposed in the abdominal or thoracic section of the trunk of said dummy on either side of a sagittal median plane (P) of said abdominal or thoracic section, said pressure-measuring chambers (4) being filled with an incompressible fluid (6), the pressure of which varies depending on the intensity of the forces exerted on said chambers, each including at least one pressure-measuring cell (5) capable of delivering at its output an electrical signal representing the pressure of said fluid (6) in said pressure-measuring chambers, and **in that** the pressure-measuring chambers (4) are integrated into a support block (3) composed of foam, by each being accommodated in a cavity provided in the support block (3), the connection between the pressure-measuring chambers (4) and the foam of the support block (3) at the walls of the cavities (31) being left sliding.

2. The pressure sensor according to claim 1, **characterized in that** the pressure-measuring chambers (4) include several internal compartments (42a, 42b) separated by a partition (43) each filled with incompressible fluid (6), the chambers each including at least one pressure-measuring cell (5) .

3. The pressure sensor according to one of claims 1 or 2, **characterized in that** the pressure-measuring chambers (4) include several internal compartments (42a, 42b) communicating with one another so that the incompressible fluid (6) is capable of circulating between said compartments, said chambers including at least one pressure-measuring cell (5).

4. The pressure sensor according to one of claims 1 to 3, **characterized in that** the incompressible fluid (6) for filling the pressure-measuring chambers (4) consists optionally of a liquid, a gel or an emulsion.

5. The pressure sensor according to one of claims 1 to 4, **characterized in that** the pressure-measuring chambers (4) consist of a shell (41) made of flexible material.

6. The pressure sensor according to claim 5, **characterized in that** the pressure-measuring chambers (4) consist of a shell (41) made of polyurethane.

7. The pressure sensor according to one of claims 5 or 6, **characterized in that** the pressure-measuring chambers (4) are accommodated in cavities (31) provided for this purpose in the abdominal or thoracic section of the dummy and removable from these cavities (31).

8. The pressure sensor according to one of claims 5 to 7, **characterized in that** the shell (41) of the pressure-measuring chambers (4) has local variations in stiffness.

9. The pressure sensor according to one of claims 6 to 7, **characterized in that** the shell (41) of the pressure-measuring chambers (4) has local variations in thickness to obtain a local variation in stiffness of the shell (41).

10. The pressure sensor according to one of claims 5 to 7, **characterized in that** the shell (41) of the pressure-measuring chambers (4) includes external local superficial reinforcements (9) consisting of a layer of additional material glued to an external surface of the shell (41) to obtain a local variation of stiffness of the shell.

11. The pressure sensor according to one of claims 5 to 10, **characterized in that** the shell (41) of the pressure-measuring chambers (4) consists of several materials having different mechanical properties or of several elements of the same material having different mechanical properties and having sealed welded or glued links.

12. The pressure sensor according to one of claims 7 to 11, **characterized in that** the pressure-measuring chambers (4) are blocked in vertical and/or horizontal translation in their cavity by a mutual link (7, 8), by means of gluing, or an enlargement of the lower portion of the shells of the pressure-measuring chambers or any other mechanical means.

13. The pressure sensor according to one of claims 1 to 12, **characterized in that** each pressure-measuring chamber (4) includes at least two pressure-measuring cells (5) in two opposite positions of the pressure-measuring chamber.

14. The pressure sensor according to one of claims 1 to 13, **characterized in that** the pressure-measuring chambers (4) have an axisymmetric shape.

15. The pressure sensor according to one of claims 1 to 14, **characterized in that** the pressure-measuring chambers (4) have a cylindrical shape parallel to a main compression axis, and are left sliding in the cavities (31) with respect to the surrounding foam of the support block 3.
